# EUROPEAN PATENT APPLICATION

(11) **EP 4 657 291 A1**
(43) Date of publication of application: **03.12.2025**
(21) Application number: 24747271.5
(22) Date of filing: 22.01.2024
(51) Int. Cl.: G06F 21/55

(54) **COMMUNICATION SYSTEM, INFORMATION PROCESSING APPARATUS, AND MONITORING METHOD**

(30) Priority: 23.01.2023 JP 2023008027
(71) Applicant: Kabushiki Kaisha Toshiba, Tokyo 105-0023 (JP)
(72) Inventor: UCHIDA, Keisuke, Kawasaki-shi, Kanagawa 212-0013 (JP)
(74) Representative: HKW Intellectual Property PartG mbB
(86) International application number: PCT/JP2024/001707
(87) International publication number: WO 2024/157944

(57) **Abstract**

A communication system, an information processing apparatus and a monitoring method capable of monitoring unauthorized access to a port in a to-be-protected device are provided. According to an embodiment, a communication system includes an information processing apparatus and a wireless device. The wireless device includes a contact part and a first wireless communication unit. The information processing apparatus includes a first communication interface, a second communication interface, a second wireless communication unit, and a control unit. The contact part is attached to a port of a to-be-protected device. The first wireless communication unit wirelessly communicates with the information processing apparatus with the contact part being attached to the port of the to-be-protected device. The first communication interface is connected to the to-be-protected device. The second communication interface is connected to a network. The second wireless communication unit wirelessly communicates with the wireless device. The control unit blocks communications of the to-be-protected device via the network in response to a communication-impossible state with the wireless device continuing for an abnormality detection period or longer.

## Description

### FIELD

Embodiments described herein relate generally to a communication system, an information processing apparatus, and a monitoring method.

### BACKGROUND

In recent years, a system connecting various devices to a network by utilizing IoT technology has been proposed. For example, a communication system has been proposed for realizing preventive maintenance or efficient operation of facilities, in which various operation data during operation and inspection in a factory, a power plant, a railroad, or the like is collected and analyzed with artificial intelligence (AI) to detect a sign of a failure or the like in advance.

In order to newly establish such a communication system, it is necessary to collect various data via a network, and thus, it may be necessary to connect a system operated on an existing unique network to an open network. When a system operated on an existing unique network is connected to an open network, it is conceivable to enhance security by incorporating security measures into a device itself newly connected to the open network in order to cope with unauthorized access. However, changing an existing device that is already operating often requires replacing the device itself, which is difficult to implement in terms of cost and availability.

Information processing apparatuses have been developed as security devices for ensuring confidentiality and integrity of communication paths without changing existing devices. Such an information processing apparatus is connected between an existing device and a network. An information processing apparatus connected between an existing device and a network has a function of blocking communications of an attacker upon detecting an attack on the device, a virus infection, or the like by observing a behavior of communication in the existing device.

However, some existing devices have a port as an interface to which an external device may be locally connected in addition to the network. There is a problem wherein while a conventional information processing apparatus ensures security in a communication path via a network, there is no method for monitoring unauthorized access to an idle port provided in an existing device.

### CITATION LIST

### PATENT LITERATURE

Patent Literature 1: Jpn. Pat. Appln. KOKAI Publication No. 2019-50485

### SUMMARY

### TECHNICAL PROBLEM

An object of the present invention is to provide a communication system, an information processing apparatus, and a monitoring method, capable of monitoring unauthorized access to a port in a device to be protected.

### SOLUTION TO PROBLEM

According to an embodiment, a communication system includes an information processing apparatus and a wireless device. The wireless device includes a contact part and a first wireless communication unit. The information processing apparatus includes a first communication interface, a second communication interface, a second wireless communication unit, and a control unit. The contact part is attached to a port of a device to be protected. The first wireless communication unit wirelessly communicates with the information processing apparatus in a state where the contact part is attached to the port of the device to be protected. The first communication interface is connected to the device to be protected. The second communication interface is connected to a network. The second wireless communication unit wirelessly communicates with the wireless device. The control unit blocks communications of the device to be protected via the network in response to a communication-impossible state with the wireless device continuing for an abnormality detection period or longer.

### BRIEF DESCRIPTION OF THE DRAWINGS

FIG. 1 is a diagram illustrating a configuration example of a communication system according to an embodiment.
FIG. 2 is a block diagram illustrating a configuration example of an information processing apparatus in the communication system according to the embodiment.
FIG. 3 is a block diagram illustrating a configuration example of an IC card attached to the information processing apparatus according to the embodiment.
FIG. 4 is a diagram illustrating an example of a hardware configuration of an IC card as a configuration example of functions of the IC card attached to the information processing apparatus according to the embodiment.
FIG. 5 is a block diagram illustrating a configuration example of a dongle attached to a port of an IoT device in the communication system according to the embodiment.
FIG. 6 is a block diagram illustrating a configuration example of a communication management apparatus in the communication system according to the embodiment.
FIG. 7 is a sequence illustrating a flow of communication control between the IoT device (terminal device) and a server apparatus in the communication system according to the embodiment.
FIG. 8 is a sequence illustrating an example of processing performed by the information processing apparatus, the dongle, and the communication management apparatus in the communication system according to the embodiment.

### DETAILED DESCRIPTION

Hereinafter, embodiments will be described with reference to the drawings.

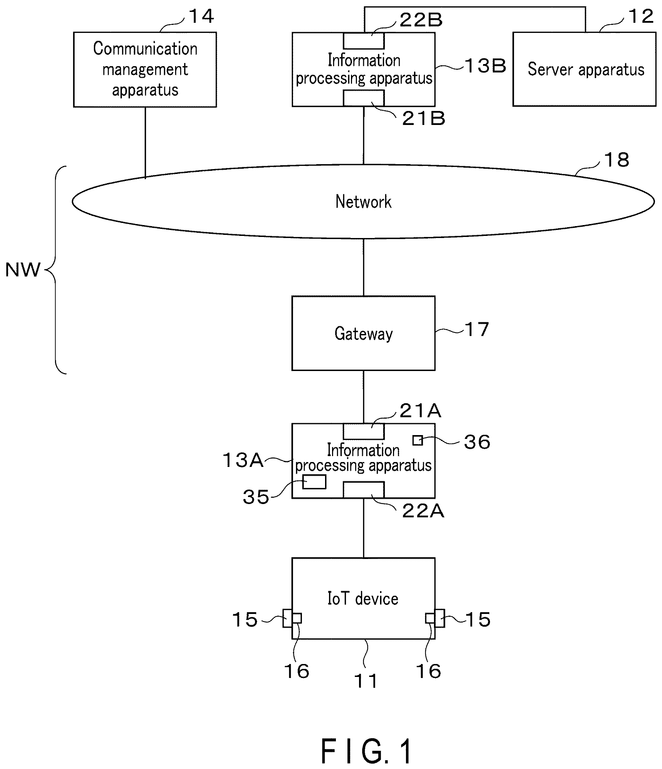

FIG. 1 is a diagram illustrating a configuration example of a communication system including an information processing apparatus 13 according to an embodiment.

The communication system 1 includes an IoT device (a terminal device, a device to be protected) 11, a server apparatus 12, an information processing apparatus 13 (13A, 13B), a communication management apparatus 14, a wireless dongle (a wireless device) 15, and a gateway 17. In the configuration example illustrated in FIG. 1, the gateway 17 and the network 18 are collectively referred to as a network NW.

In the communication system 1, it is assumed that each information processing apparatus 13 is connected to an existing communication system. That is, the respective information processing apparatuses 13 are connected to positions as illustrated in FIG. 1 in an existing system including the IoT device 11, the server apparatus 12, the communication management apparatus 14, and the gateway 17.

Each information processing apparatus 13 is installed so as to establish the communication system 1 while maintaining the availability of the existing system without changing the configuration of each apparatus. The information processing apparatus 13 includes, as illustrated in FIG. 1, a first communication port (e.g., a first LAN port) 21 and a second communication port (e.g., a second LAN port) 22 for connecting to a communication path in an existing system. For example, the information processing apparatus 13 is connected between the IoT device 11 and the gateway 17 through connection of the first communication port 21A to the gateway 17 and connection of the second communication port 22A to the IoT device 11.

The information processing apparatus 13 according to the present embodiment includes a wireless communication unit 35, a switch 36, and the like. The wireless communication unit 35 is configured to perform wireless communication with a wireless dongle 15 attached to a port 16 of the IoT device 11. The wireless communication unit 35 and the switch 36 may be included not only in a device-side information processing apparatus 13A but also in a server-side information processing apparatus 13B. In the present embodiment, it is assumed that the wireless communication unit 35 and the switch 36 are provided in the device-side information processing apparatus 13A connected to the IoT device 11 serving as a device to be protected.

The IoT device 11 is a device (a terminal device, a client terminal) that acquires various data. For example, the IoT device 11 may be a device that acquires data with a sensor or the like, or may be a device that acquires data input by an operator. The IoT device 11 transmits the acquired data to the server apparatus 12. The IoT device 11 may have a function of controlling an operation according to control information of the server apparatus 12.

The IoT device 11 is connected to the network NW via the device-side information processing apparatus 13A connected thereto. The server apparatus 12 is connected to the network NW via the server-side information processing apparatus 13B. That is, each IoT device 11 and the server apparatus 12 are configured to communicate with each other via the information processing apparatus 13, the network NW, and the like connected thereto.

The IoT device 11 further includes the port 16 to which an external device is connected. The port 16 is a general-purpose port, and is, for example, a universal serial bus (USB) port. The port 16 may include a connector to which a connection part of an external device is physically connected, and may be any port enabling the attached external device and the IoT device 11 to input and output data. For example, the port 16 may be a slot to which a card-like electronic device inputting and outputting data is connected. In the present embodiment, a wireless dongle 15 described below is connected to the port 16.

The wireless dongle 15 is a wireless device that is physically attached to the port 16 of the IoT device 11. The wireless dongle 15 operates with power supplied from the port 16. The wireless dongle 15 wirelessly communicates with the information processing apparatus 13. The wireless dongle 15 driven by the power supplied from the port 16 of the IoT device 11 wirelessly communicates with the wireless communication unit 35 of the device-side information processing apparatus 13A.

The wireless dongle 15, when attached to the port 16 of the IoT device 11, continuously performs wireless communication with the wireless communication unit 35 of the information processing apparatus 13A. Upon being removed from the port 16, the wireless dongle 15 stops operating because the supply of power is interrupted. Thus, the device-side information processing apparatus 13A can determine whether the wireless dongle 15 is attached to the port 16 of the IoT device 11 based on whether the communication with the wireless dongle 15 is continued.

The server apparatus 12 collects data acquired by the IoT device 11. For example, the server apparatus 12 manages and analyzes data collected from each IoT device 11. The server apparatus 12 may transmit control information to the IoT device 11.

The device-side information processing apparatus 13A is connected between the IoT device 11 and the gateway 17 of the network NW. The device-side information processing apparatus 13A includes a first communication port 21A as a network NW-side interface connector, and a second communication port 22A as a device-side interface connector. The first communication port 21A and the second communication port 22A are, for example, LAN ports. In the configuration example illustrated in FIG. 1, the gateway 17 is connected to the first communication port 21A, and the IoT device 11A is connected to the second communication port 22A.

The device-side information processing apparatus 13A mediates communication between the IoT device 11 and the server apparatus 12. The information processing apparatus 13A acquires data transmitted from the IoT device 11 to the server apparatus 12 and outputs the acquired data to the server apparatus 12. The information processing apparatus 13A encrypts, when transmitting the data to the server apparatus 12, the data acquired from the IoT device 11, and transmits the encrypted data to the server apparatus 12.

Furthermore, the information processing apparatus 13A acquires data transmitted from the server apparatus 12 to the IoT device 11 and outputs the acquired data to the IoT device 11. Here, the data acquired by the information processing apparatus 13A is encrypted data. The information processing apparatus 13A decrypts, when outputting the data to the IoT device 11, the data acquired from the server apparatus 12 via the server-side information processing apparatus 13B, and outputs the decrypted data to the IoT device 11.

Moreover, the device-side information processing apparatus 13A may be configured to be able to communicate with other device-side information processing apparatuses 13A via the gateway 17. In this case, whether to permit communication with other device-side information processing apparatuses 13A may be set according to a communication permission setting that is set for each device-side information processing apparatus 13A.

The server-side information processing apparatus 13B is connected between the server apparatus 12 and the network NW. The server-side information processing apparatus 13B has a first communication port 21B as a network NW-side interface connector, and a second communication port 22B as a server-side interface connector. The network 18 is connected to the first communication port 21B, and the server apparatus 12 is connected to the second communication port 22B.

The server-side information processing apparatus 13B mediates communication between the IoT device 11 and the server apparatus 12. The server-side information processing apparatus 13B acquires data transmitted from the server apparatus 12 to the IoT device 11 and outputs the acquired data to the IoT device 11. Here, the server-side information processing apparatus 13B encrypts, when transmitting the data to the IoT device 11, the data acquired from the server apparatus 12 and transmits the encrypted data to the IoT device 11.

Furthermore, the server-side information processing apparatus 13B acquires data transmitted from the IoT device 11 to the server apparatus 12 and outputs the acquired data to the server apparatus 12. Here, the data acquired by the server-side information processing apparatus 13B is encrypted data. The server-side information processing apparatus 13B decrypts, when outputting the data to the server apparatus 12, the data acquired from the IoT device 11 via the device-side information processing apparatus 13A, and outputs the decrypted data to the server apparatus 12.

Each information processing apparatus 13 (13A, 13B) executes encryption according to, for example, a protocol of SSL (Secure Socket Layer)/TLS (Trans port Layer Security). For the device-side information processing apparatus 13A and the server-side information processing apparatus 13B, for example, the SSL/TLS protocol is combined with HTTP (Hypertext Transfer Protocol) to replace it with HTTPS (HTTP Secure) having improved security in which data contained in HTTP is encrypted.

The data encryption performed by the device-side information processing apparatus 13A and the server-side information processing apparatus 13B is not limited to converting HTTP to HTTPS. For the device-side information processing apparatus 13A and the server-side information processing apparatus 13B, the SSL/TLS protocol may be combined with various communication protocols to replace it with secure communication protocols having improved security. For example, for the device-side information processing apparatus 13A and the server-side information processing apparatus 13B, FTP (File Transfer Protocol) may be replaced with FTPS (FTP Secure).

In the communication system 1, data encrypted by the device-side information processing apparatus 13A or the server-side information processing apparatus 13B is output to the network NW. In other words, data flowing through the network NW in the communication system 1 is encrypted data. Therefore, the risk of the data transmitted to and received from the network NW being accessed from the outside with malicious intent or being tapped is avoided and the safety is improved. The tapping of data here refers to an "act of stealing data" or "act of extracting data."

The communication management apparatus 14 is a server apparatus for managing communication using the device-side information processing apparatus 13A and the server-side information processing apparatus 13B. For example, the communication management apparatus 14 functions as a private certificate authority as well. The communication management apparatus 14 issues a client certificate and a private key to each information processing apparatus 13.

In the configuration example illustrated in FIG. 1, the communication management apparatus 14 issues a client certificate and a private key stored in an IC card attached to the information processing apparatus 13. In a case where an IC card including an authentication unit and a secure storage unit is attached to the device-side information processing apparatus 13A, the communication management apparatus 14 transmits a client certificate and a private key to be stored in the IC card to the information processing apparatus 13A via the network NW.

Furthermore, the communication management apparatus 14 issues a server certificate and a private key to the server-side information processing apparatus 13B. In a case where an IC card including an authentication unit and a secure storage unit is attached to the server-side information processing apparatus 13B, the communication management apparatus 14 transmits a server certificate and a private key to be stored in the IC card to the server-side information processing apparatus 13B via the network NW. The client certificate, the server certificate, and the private key are each information necessary for determining a common key (session key) used when the device-side information processing apparatus 13A and the server-side information processing apparatus 13B perform encrypted communication.

Examples of the IoT device 11 and the server apparatus 12 will be described.

The IoT device 11 and the server apparatus 12 are, for example, components that establish a social infrastructure system. Social infrastructure refers to facilities necessary for preparing social infrastructure such as a road traffic network, power generation facility, power distribution facility, water treatment facility, or gas distribution facility. The social infrastructure system is a mechanism for stably operating social infrastructure by, for example, monitoring the social infrastructure, grasping a change in the situation, and coping with the change.

As a concrete example, in a case of a monitoring system for monitoring a road, a public facility or the like with a video, the IoT device 11 is a device (network monitoring camera) that transmits imaging data captured to monitor a road situation or the like via the network NW, and the server apparatus 12 is a device that receives the imaging data transmitted by the IoT device 11 via the network NW. The IoT device 11 and the server apparatus 12 may be components of a system that monitors a power status of a power generation facility or a power distribution facility. The IoT device 11 and the server apparatus 12 may be components of a system that acquires a delivery status of a distribution center. The IoT device 11 and the server apparatus 12 may be components of a system or the like that acquires an operation status of a facility in a factory or a research institution.

Note that the social infrastructure system such as a monitoring system is an example of a communication system including the IoT device 11 and the server apparatus 12 as components, and the IoT device 11 and the server apparatus 12 are not limited to the components of the social infrastructure system.

The IoT device 11 includes a network (NW) communication unit, a device control unit, and a data acquisition unit. The NW communication unit is a communication interface for performing data communication. The NW communication unit is a communication interface such as Ethernet (registered trademark) that enables communication with an external device via a network. In other words, the IoT device 11 is a device having a configuration in which the NW communication unit enables communication with a device connected to the network.

In the communication system 1 according to the present embodiment, the NW communication unit of the IoT device 11 is connected to the information processing apparatus 13 and communicates with the server apparatus 12 connected to the network NW via the information processing apparatus 13. That is, the communication system 1 according to the present embodiment is a system that can be established by connecting the information processing apparatus 13A between the IoT device 11 and the network NW and connecting the information processing apparatus 13B between the server apparatus 12 and the network NW in a retrofit manner to an existing system in which the IoT devices 11 and the server apparatus 12 are configured to communicate with each other via the network.

The device control unit is, for example, a processor including a CPU and the like, and comprehensively controls the IoT device 11. The device control unit, for example, starts or stops acquiring of data performed by the data acquisition unit and executes operation settings or the like for the data acquisition unit under the control of the server apparatus 12. The data acquisition unit acquires data and outputs the acquired data to the control unit by operating in accordance with an instruction from the device control unit. The device control unit transmits (outputs) the data acquired by the data acquisition unit through the NW communication unit.

In the communication system 1 according to the present embodiment, the NW communication unit of the IoT device 11 is connected to the information processing apparatus 13. Therefore, each IoT device 11 inputs and outputs data via the information processing apparatus 13. For example, the IoT device 11 communicates with the server apparatus 12 via the device-side information processing apparatus 13A, the network NW, and the server-side information processing apparatus 13B.

The server apparatus 12 includes a network (NW) communication unit, a server control unit, a data storage unit, and the like. The NW communication unit is a communication interface for performing data communication. The NW communication unit is a communication interface such as Ethernet (registered trademark) that enables communication with an external device via a network. In other words, the server apparatus 12 is a device having a configuration in which the NW communication unit enables communication with a device connected to the network.

In the communication system 1 according to the present embodiment, the NW communication unit of the server apparatus 12 is connected to the information processing apparatus 13B and communicates with devices connected to the network NW via the information processing apparatus 13B. That is, the communication system 1 according to the present embodiment is a system that can be established by connecting the information processing apparatus 13B between the server apparatus 12 and the network in a retrofit manner to an existing system in which the IoT devices 11 and the server apparatus 12 are configured to communicate with each other via the network.

The server control unit is, for example, a processor including a CPU and the like, and comprehensively controls the server apparatus. The server control unit, for example, acquires data from each IoT device 11 through the NW communication unit, and stores the data acquired from the IoT device 11 in the data storage unit. The data storage unit stores data acquired from the IoT device 11 in accordance with an instruction from the server control unit. The server control unit outputs a control command such as an operation instruction to each IoT device 11 communicating through the NW communication unit.

Next, a description will be given of communication between the IoT device 11 and the server apparatus 12.

In general, when the IoT device (a client terminal, a communication device) having communication functions and the server apparatus are connected to each other via their NW communication units and the network, HTTP, which is a general communication protocol, may be used for communication between the IoT device and the server device. In this case, unencrypted information (so-called plaintext) output to the network by the communication device or the server apparatus flows through the network. In this case, if data on the network is acquired from the outside with malicious intent, there is a risk that the data will be easily tapped or falsified. As a countermeasure against such an unauthorized attack, it is conceivable for the communication device to encrypt data and output the encrypted data to the network.

However, an existing IoT device (a client terminal) used in an existing system often does not have a resource for performing processing for encryption. For example, it is often the case that a monitoring camera as an example of the IoT device includes a processor such as a CPU for compressing and encoding imaging data but does not include a resource for performing processing for encryption. Therefore, in an existing system, in order to encrypt data output from the IoT device to the network, it is necessary to further attach a processor for encrypting data to the IoT device and it is considered necessary to change or replace a hardware configuration of the IoT device. In an existing IoT device as a component constituting a social infrastructure system such as a monitoring system, the hardware configuration cannot be easily changed or replaced.

In view of the circumstances as described above, a communication system that can be configured to encrypt the data from the IoT device and transmit the encrypted data to the network NW without changing an existing IoT device is desirable. In the communication system 1 according to the present embodiment, it is possible to safely transmit data by connecting the information processing apparatus to the existing IoT device and server apparatus without changing the hardware configuration of the existing IoT device or replacing the existing IoT device with a new IoT device in the existing system.

That is, in the communication system 1, the information processing apparatus 13 connected between the IoT device 11 and the network NW encrypts the data transmitted from the IoT device 11 to the server apparatus 12 and outputs the encrypted data to the network NW. Furthermore, in the communication system 1, the server-side information processing apparatus 13B connected between the server apparatus 12 and the network NW encrypts data such as control data addressed to the IoT device 11 from the server apparatus 12 and outputs the encrypted data to the network NW. Thus, according to the communication system 1 of the present embodiment, it is possible to enhance the safety of data flowing through the network NW without changing the IoT device 11 and the server apparatus 12.

Next, a configuration of the information processing apparatus 13 according to the embodiment will be described.

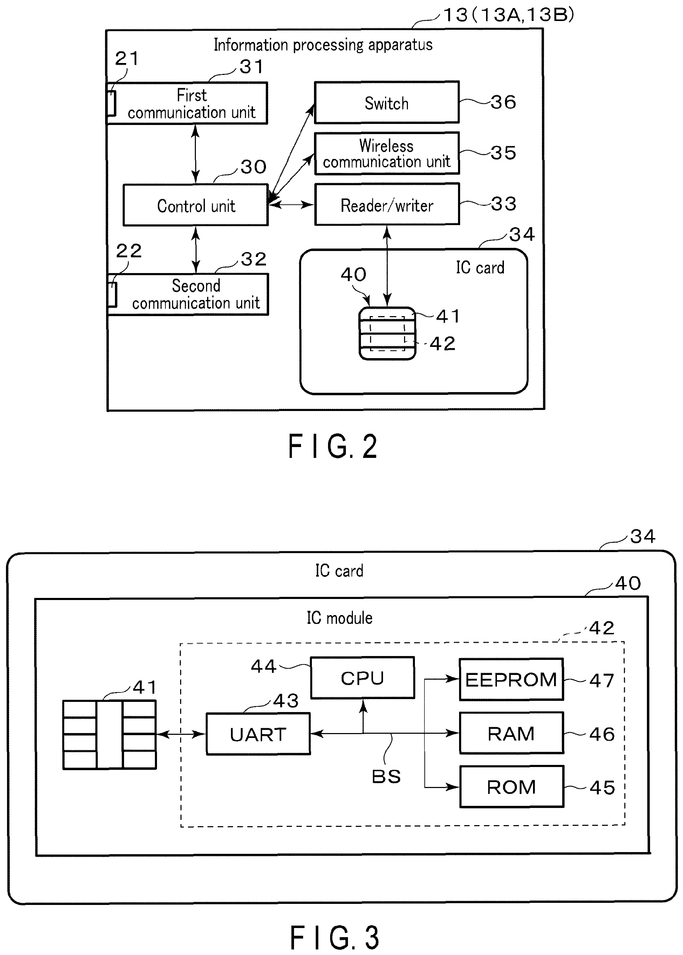

FIG. 2 is a block diagram illustrating a configuration example of the information processing apparatus 13 shown in FIG. 1.

As illustrated in FIG. 2, the information processing apparatus 13 includes a control unit 30, a first communication unit 31, a second communication unit 32, a reader/writer 33, an IC card 34, a wireless communication unit 35, and a switch 36. Herein, the reader/writer 33 and the IC card 34 are examples of an "authentication unit." The authentication unit is not limited to the one realized by the reader/writer 33 and the IC card 34. The authentication unit may be realized by the control unit 30 or may be realized by a processing circuit for authentication processing.

The control unit 30 includes, for example, a processor including a CPU. The control unit 30 comprehensively controls the information processing apparatus 13. The control unit 30, for example, transmits a command to the IC card 34 and receives a response from the IC card 34 via the reader/writer 33. The control unit 30 transmits information based on the response received from the IC card 34 to the other information processing apparatus 13 via the first communication unit 31. Furthermore, the control unit 30 transmits a command to the IC card 34 based on the information received from the other information processing apparatus 13 via the first communication unit 31.

The first communication unit 31 is a network communication unit for communicating with each device connected via the network NW. The first communication unit 31 includes a first communication port 21 (21A, 21B) connected to the network NW. The first communication unit 31 is configured by, for example, a network interface card (NIC). For example, the information processing apparatus 13A communicates with the communication management apparatus 14 or the server-side information processing apparatus 13B via the network NW through the first communication unit 31.

Specifically, the first communication unit 31 of the device-side information processing apparatus 13A acquires data from the gateway 17 connected to the first communication port 21A, encrypts the data addressed to the server apparatus 12, and outputs the encrypted data to the network 18 via the gateway 17. The first communication unit 31 of the server-side information processing apparatus 13B acquires the encrypted data from the network 18 connected to the first communication port 21B, decrypts the acquired data, and outputs the decrypted data to the server apparatus 12.

The second communication unit 32 is a device communication unit for communicating with the IoT device 11 or the server apparatus 12 as a terminal device. The second communication unit 32 includes a second communication port 22 (22A, 22B) connected to a terminal device (the IoT devices 11 or the server apparatus 12) executing communication. For example, the second communication unit 32 is configured by a network interface card (NIC).

Specifically, the second communication unit 32 of the device-side information processing apparatus 13A acquires imaging data from a camera as the IoT device 11 connected to the second communication port 22A, and outputs the decrypted control data to the IoT device 11. The second communication unit 32 of the server-side information processing apparatus 13B acquires control data from the server apparatus 12 connected to the second communication port 22B, and outputs the decrypted imaging data to the server apparatus 12.

In the information processing apparatus 13 according to the present embodiment, the IoT device 11 and the second communication unit 32 may be in a communication-possible state after it is confirmed that the communication permission setting is enabled by the communication management apparatus 14. That is, the first communication unit 31 is linked up to communicate with the communication management apparatus 14 via the network NW. The second communication unit 32 may be linked up with the IoT device 11 via the second communication port 22A after the first communication unit 31 is linked up with the communication management apparatus 14 via the network NW and it is confirmed that the communication permission setting in the information processing apparatus 13A is enabled.

The wireless communication unit 35 is an interface for wirelessly communicating with the wireless dongle 15. The wireless communication unit 35 communicates with the wireless dongle 15 attached to the port 16 of the IoT device 11 according to, for example, short-range wireless communication.

The switch 36 is an operation unit for the user to input an instruction. The switch 36 is turned on, for example, when the IoT device 11 is powered on.

The reader/writer 33 communicates with the IC card 34. The reader/writer 33 includes an interface corresponding to a communication method of the IC card 34. When the IC card 34 is a contact type IC card, the reader/writer 33 includes an interface connected to a contact part of the IC card 34 as illustrated in FIG. 2, and transmits and receives data via the interface.

The IC card 34 is formed by mounting an IC module 40 on, for example, a plastic card base material. The IC card 34 includes the IC module 40 and a card base material (main body) in which the IC module 40 is embedded. In the configuration example illustrated in FIG. 2, the IC card 34 is configured to be attachable to and detachable from the reader/writer 33 of the information processing apparatus 13 (13A, 13B). The IC card 34 communicates with the information processing apparatus 13 (13A, 13B) in a state of being attached to the reader/writer 33 via a contact part 41.

The IC card 34 receives, for example, a command (processing request) transmitted by the information processing apparatus 13 (13A, 13B) via the contact part 41, and executes processing (command processing) according to the received command. The IC card 34 transmits a response (processing response), which is an execution result of the command processing, to the information processing apparatus 13 (13A, 13B) via the contact part 41.

The IC module 40 includes the contact part 41 and an IC chip 42. The contact part 41 has terminals for various signals necessary for the IC card 34 to operate. The terminals for various signals include a terminal receiving supply of power source voltages, clock signals, reset signals, and the like from the information processing apparatus 13 (13A, 13B), and a serial data input/output terminal (SIO terminal) for communicating with the information processing apparatus 13 (13A, 13B). The IC chip 42 is, for example, a large scale integration (LSI) such as a one-chip microprocessor.

Herein, a description will be given of a hardware configuration of the IC card 34 as a configuration example of the authentication unit included in the information processing apparatus 13 according to the embodiment.

FIG. 3 is a diagram illustrating an example of the hardware configuration of the IC card 34 shown in FIG. 2.

The IC card 34 has the IC module 40 provided with the contact part 41 and the IC chip 42. The IC chip 42 includes, as illustrated in FIG. 3, a UART (universal asynchronous receiver transmitter) 43, a CPU 44, a ROM (read-only Memory) 45, a RAM (random-access memory) 46, and an EEPROM (registered trademark) (electrically erasable programmable ROM) 47. Components (43 to 47) are connected to each other via an internal bus BS.

The UART 43 performs serial data communication with the information processing apparatus 13 (13A, 13B) via the SIO terminal described above. The UART 43 outputs data (e.g., 1-byte data) obtained by parallel-converting a serial-data signal received via the SIO terminal to the internal bus BS. The UART 43 serial-converts the data acquired via the internal bus BS and outputs the data to the information processing apparatus 13 (13A, 13B) via the SIO terminal. The UART 43 receives, for example, a command from the information processing apparatus 13 (13A, 13B) via the SIO terminal. Furthermore, the UART 43 transmits a response to the information processing apparatus 13 (13A, 13B) via the SIO port.

The CPU 44 executes a program stored in the ROM 45 or the EEPROM 47 to perform various kinds of processing of the IC card 34. The CPU 44 executes, for example, command processing according to the command received by the UART 43 via the contact part 41.

The ROM 45 is, for example, a nonvolatile memory such as a mask ROM, and stores programs for executing various kinds of processing of the IC card 34 and data such as command tables. The RAM 46 is a volatile memory such as an SRAM (static RAM), and temporarily stores data used when various kinds of processing of the IC card 34 are performed. The EEPROM 47 is, for example, an electrically rewritable nonvolatile memory. The EEPROM 47 stores various data used by the IC card 34. The EEPROM 47 stores, for example, information used for various services (applications) using the IC card 34.

Next, functions of the IC card 34 as a configuration example of the authentication unit in the information processing apparatus 13 according to the embodiment will be described.

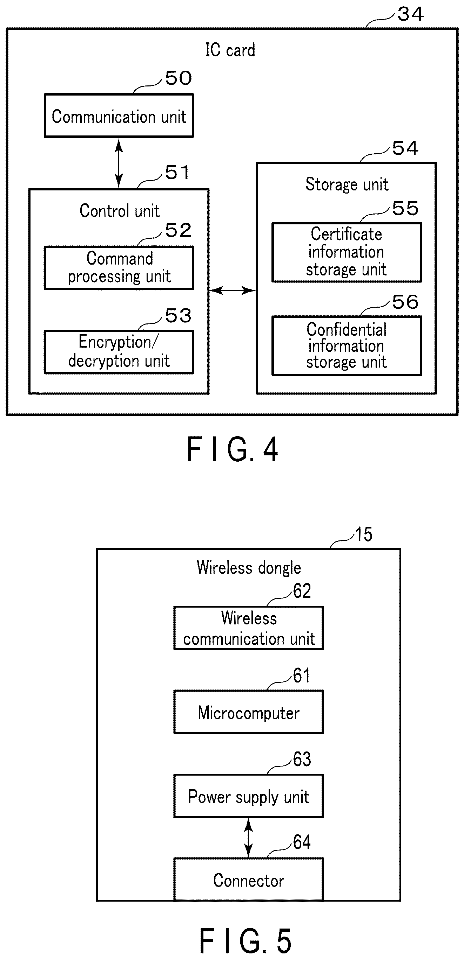

FIG. 4 is a block diagram illustrating an example of the functional configuration of the IC card 34 shown in FIG. 3. The IC card 34 includes a communication unit 50, a control unit 51, and a storage unit 54. Here, each unit of the IC card 34 shown in FIG. 4 is realized by using the hardware of the IC card 34 shown in FIG. 3.

The communication unit 50 transmits and receives commands and responses to and from the information processing apparatus 13 (13A, 13B) via the contact part 41. The communication unit 50 is a function of transmitting and receiving data using the UART 43 by the CPU 44 executing the program stored in the ROM 45. The communication unit 50 receives a command (processing request) requesting predetermined processing from the information processing apparatus 13 (13A, 13B), and transmits a response (processing response) to the command to the information processing apparatus 13 (13A, 13B). The communication unit 50 stores in the RAM 46 the received data received from the information processing apparatus 13 (13A, 13B) via the UART 43. The communication unit 50 transmits the transmission data stored in the RAM 46 to the information processing apparatus 13 (13A, 13B) via the UART 43.

The control unit 51 controls the operation of the IC card 34. The control unit 51 is realized by the CPU 44, the RAM 46, the ROM 45 or the EEPROM 47. The control unit 51 includes a command processing unit 52 and an encryption/decryption unit 53. Here, the processing performed by the command processing unit 52 is an example of "authentication processing." The processing performed by the encryption/decryption unit 53 is an example of "encryption/decryption processing."

The command processing unit 52 executes various types of command processing. The command processing unit 52 performs, for example, an SSL/TLS handshake as command processing for requesting an HTTPS request described later. The SSL/TLS handshake exchanges key information and the like necessary for encrypted communication and performs mutual authentication with a communication destination device. The mutual authentication is processing of mutually confirming that the device-side information processing apparatus 13A and the server-side information processing apparatus 13B are properly authenticated apparatuses before they communicate with each other.

The encryption/decryption unit 53 executes processing of encrypting data and processing of decrypting the encrypted data. The encryption/decryption unit 53 encrypts data acquired via the communication unit 50 and output by a device (the IoT device 11 or the server apparatus 12). The encryption/decryption unit 53 decrypts the encrypted data from the network NW acquired via the communication unit 50.

The storage unit 54 stores data. The storage unit 54 is realized by the EEPROM 47 in which reading and writing of data are executed under the control of the control unit 51. The storage unit 54 includes a certificate information storage unit 55 and a confidential information storage unit 56. The certificate information storage unit 55 stores a certificate for a device (the IoT device 11 or the server apparatus 12) issued by the communication management apparatus 14. Specifically, the certificate information storage unit 55 of the IC card 34 attached to the information processing apparatus 13 stores information indicating a client certificate. The certificate information storage unit 55 of the IC card 34 attached to the server-side information processing apparatus 13B stores information indicating a server certificate.

The confidential information storage unit 56 stores a private key for a device (the IoT device 11 or the server apparatus 12) issued by the communication management apparatus 14. Specifically, the confidential information storage unit 56 of the IC card 34 attached to the information processing apparatus 13 stores information indicating a private key issued to the information processing apparatus 13. Furthermore, the certificate information storage unit 55 of the IC card 34 attached to the server-side information processing apparatus 13B stores information indicating a private key issued to the server-side information processing apparatus 13B.

Next, a configuration of the wireless dongle 15 in the communication system 1 according to the embodiment will be described.

FIG. 5 is a block diagram illustrating a configuration example of the wireless dongle 15 in the communication system 1 according to the embodiment.

In the configuration example shown in FIG. 5, the wireless dongle 15 includes a microcomputer 61, a wireless communication unit 62, a power supply unit 63, and a connector 64.

The microcomputer 61 is a control unit that controls the wireless dongle 15. The microcomputer 61 includes, for example, a processor such as a CPU, and a system memory such as a ROM, a RAM and an NVM. The microcomputer 61 realizes various kinds of processing by the processor executing programs stored in the system memory or the like. For example, the microcomputer 61 is a secure microcomputer having a function of performing mutual authentication with a communication partner. The microcomputer 61 executes wireless communication using the wireless communication unit 62 after performing mutual authentication with the wireless communication unit 35 of the information processing apparatus 13A.

The wireless communication unit 62 is a communication interface that performs wireless communication. The wireless communication unit 62 is configured by a communication interface of a wireless communication method corresponding to the wireless communication unit 35 included in the information processing apparatus 13.

The power supply unit 63 functions as a power supply that supplies power supplied via the connector 64 to each unit. The connector 64 is configured to be attachable to the port 16 of the IoT device 11. When the wireless dongle 15 is attached to the port 16, the connector 64 comes into contact with the contact part in the port 16 of the IoT device 11 and receives a power supply from the port 16. The power supply unit 63 converts the power supplied to the connector 64 into power for operating each unit (the microcomputer 61 and the wireless communication unit 62) to supply operation power to each unit.

Next, a configuration of the communication management apparatus 14 in the communication system 1 according to the embodiment will be described.

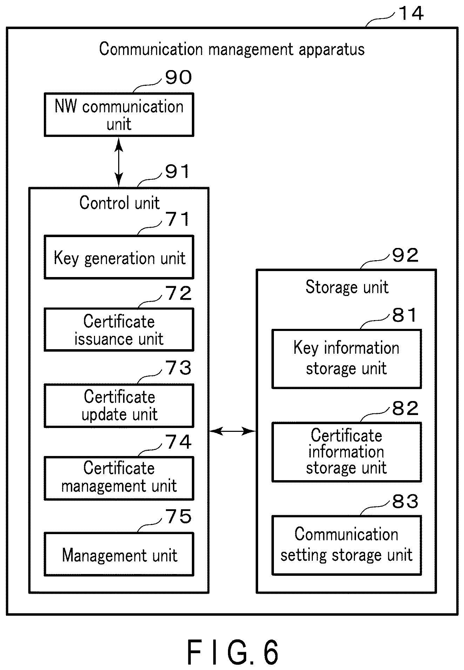

FIG. 6 is a block diagram illustrating a configuration example of the communication management apparatus 14 illustrated in FIG. 1.

The communication management apparatus 14 includes a network (NW) communication unit 90, a control unit 91, and a storage unit 92.

The NW communication unit 90 is connected to the network NW and communicates with the information processing apparatus 13 (13A, 13B) via the network NW.

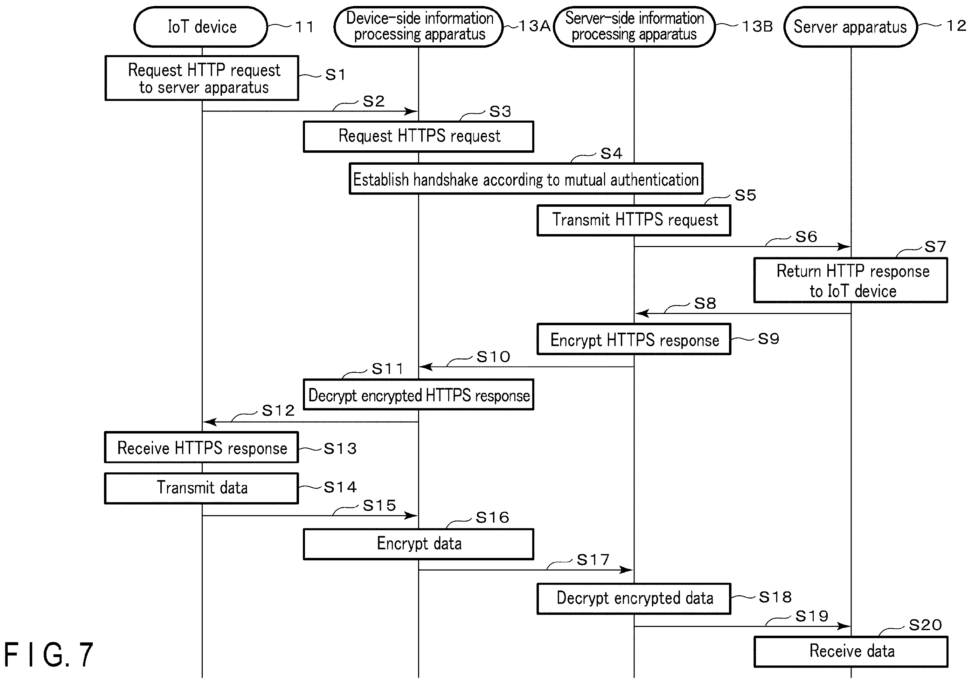

The control unit 91 includes, for example, a processor such as a CPU and a system memory such as a ROM and a RAM. The control unit 91 realizes various kinds of processing by the processor executing a program stored in the storage unit such as a system memory. The control unit 91 comprehensively controls the communication management apparatus 14. The control unit 91 manages security information used for communication between the information processing apparatus 13 and other devices. For example, the control unit 91 operates as a private certificate authority that mainly authenticates the information processing apparatus 13 (13A, 13B). In the example illustrated in FIG. 7, upon the processor executing the program, the control unit 91 executes processing for realizing functions as a key generation unit 71, a certificate issuance unit 72, a certificate update unit 73, a certificate management unit 74, and a management unit 75.

The key generation unit 71 issues a private key corresponding to a public key included in a certificate described later based on, for example, a certification application from the information processing apparatus 13 (13A, 13B).

The certificate issuance unit 72 issues a certificate for authenticating the information processing apparatus 13 (13A, 13B) based on, for example, a certification application from the information processing apparatus 13 (13A, 13B). The certificate includes, for example, a public key and information indicating an owner of the information processing apparatus 13 (13A, 13B).

The certificate update unit 73 updates the certificate by setting a new expiration date for the certificate that has expired. The certificate update unit 73, for example, issues a certificate in which the expiration date of the certificate issued to the information processing apparatus 13 (13A, 13B) is extended based on an update application from the information processing apparatus 13 (13A, 13B), and transmits the issued certificate to the information processing apparatus 13 (13A, 13B). The information indicating the issued certificate is received by the information processing apparatus 13 (13A, 13B) and stored in the certificate information storage unit 55 of the IC card 34 of the information processing apparatus 13 (13A, 13B), and thus, the expiration date of the certificate of the information processing apparatus 13 (13A, 13B) is extended.

The certificate management unit 74 manages the certificate that has already been issued. The certificate management unit 74 performs processing of invalidating a certificate issued to the information processing apparatus 13 (13A, 13B) when the mutual validity is not certified in the mutual authentication due to, for example, tampering with or theft of the IC card 34 attached to the information processing apparatus 13 (13A, 13B).

The certificate management unit 74 may reply as to whether or not the certificates issued to the information processing apparatus 13 (13A, 13B) and another communication device are issued by the certificate issuance unit 72 based on an inquiry from the information processing apparatus 13 (13A, 13B). The certificate management unit 74 may periodically check whether the issued certificate is used by the valid information processing apparatus 13 (13A, 13B).

The management unit 75 manages the information processing apparatus 13 (13A, 13B). For example, the management unit 75 remotely controls, via the network NW, the mutual authentication performed by the information processing apparatuses 13 (13A, 13B).

The storage unit 92 is configured by, for example, a nonvolatile storage device. The storage unit 92 includes a key information storage unit 81, a certificate information storage unit 82, and a communication setting storage unit 83. The key information storage unit 81 stores information indicating, for example, the public key and the private key that have already been issued. The certificate information storage unit 82 stores, for example, information indicating the certificate that has already been issued. The key information storage unit 81 and the certificate information storage unit 82 are referred to, for example, when the key generation unit 71 issues a private key, when the certificate issuance unit 72 issues a certificate, or the like. The key information storage unit 81 stores information indicating a private key issued by the key generation unit 71. The certificate information storage unit 82 stores information indicating a certificate issued by the certificate issuance unit 72.

The communication setting storage unit 83 stores communication setting information indicating a communication setting to be applied (set) to the information processing apparatus 13. The communication setting information of the information processing apparatus 13 stored in the communication setting storage unit 83 may include a communication permission setting for designating whether to permit communication with the IoT device 11 as a terminal device. The control unit 91 may supply the communication setting information stored in the communication setting storage unit 83 in response to a request from the information processing apparatus 13. For example, the control unit 91 may supply the communication setting information to the information processing apparatus 13 when the information processing apparatus 13 is activated.

Next, a description will be given of communication processing between the IoT device 11 and the server apparatus 12 via the information processing apparatuses 13A and 13B in the communication system 1.

FIG. 7 is a sequence chart illustrating an example of processing performed by the communication system 1.

The IoT device 11, when transmitting data (data detected or captured by the IoT device or the like) to the server apparatus 12, first transmits an HTTP request to the server apparatus 12 (step S1). The HTTP request transmitted by the IoT device 11 is acquired by the device-side information processing apparatus 13 (13A) (step S2).

Upon acquiring the HTTP request transmitted by the IoT device 11, the device-side information processing apparatus 13 transmits an HTTPS request (ClientHello) to the server-side information processing apparatus 13B (step S3). Thus, a handshake between the device-side information processing apparatus 13 and the server-side information processing apparatus 13B is started (step S4).

Specifically, the ClientHello transmitted by the device-side information processing apparatus 13 includes, for example, information indicating a version of TLS and a list of encryption methods and algorithms used for communication. The server-side information processing apparatus 13B transmits an HTTPS response (ServerHello) to the device-side information processing apparatus 13 as a response to the ClientHello. The ServerHello transmitted by the server-side information processing apparatus 13B includes, for example, information selected by the server apparatus 12 from among the options presented by the ClientHello. In other words, the server-side information processing apparatus 13B makes a selection from the device-side information processing apparatus 13 in response to the presentation, thereby determining a specific encryption algorithm in the communication.

Then, the server-side information processing apparatus 13B transmits information necessary for a common key used for encrypted communication. The information necessary for the common key includes, for example, information indicating the public key issued to the server apparatus 12 and the certificate thereof, and information requesting transmission of the public key of the IoT device 11 and the certificate thereof. The device-side information processing apparatus 13A transmits, to the server-side information processing apparatus 13B, the public key issued to its own apparatus, the certificate thereof, and information necessary for the common key used for encrypted communication.

The mutual authentication between the device-side information processing apparatus 13A and the server-side information processing apparatus 13B is performed, for example, as follows. The device-side information processing apparatus 13A generates a signature from the ServerHello and the like received so far, and transmits it to the server-side information processing apparatus 13B. The server-side information processing apparatus 13B verifies the signature received from the device-side information processing apparatus 13A based on the certificate received from the device-side information processing apparatus 13. Upon the verification being successful, the server-side information processing apparatus 13B determines that the certificate is certainly the certificate of the device-side information processing apparatus 13A. The server-side information processing apparatus 13B generates a signature from the ClientHello and the like received so far, and transmits it to the device-side information processing apparatus 13A. The device-side information processing apparatus 13A verifies the signature received from the server-side information processing apparatus 13B based on the certificate received from the server-side information processing apparatus 13B. Upon the verification being successful, the device-side information processing apparatus 13A determines that the certificate is certainly the certificate of the server-side information processing apparatus 13B.

Upon the mutual authentication between the device-side information processing apparatus 13A and the server-side information processing apparatus 13B being correctly performed, the device-side information processing apparatus 13A and the server-side information processing apparatus 13B generate and exchange common keys used for encryption.

The handshake ends in response to the public key and the certificate thereof issued to the server apparatus 12 and transmitted from the server-side information processing apparatus 13B being the certificate permitted by the device-side information processing apparatus 13A and in response to the public key and the certificate thereof transmitted from the device-side information processing apparatus 13A being the certificate permitted by the server-side information processing apparatus 13B.

Upon the handshake with the device-side information processing apparatus 13A being established, the server-side information processing apparatus 13B transmits an HTTP request to the server apparatus 12 (step S5). The HTTP request is the HTTP request transmitted from the IoT device 11 in step S1.

The HTTP request transmitted by the server-side information processing apparatus 13B is received by the server apparatus 12 (step S6). At this time, the server apparatus 12 recognizes that the HTTP request is requested from the IoT device 11. Therefore, the server apparatus 12 returns an HTTP response to the IoT device 11 (step S7). The HTTP response transmitted by the server apparatus 12 is acquired by the server-side information processing apparatus 13B (step S8).

The server-side information processing apparatus 13B encrypts the acquired HTTP response from the server apparatus 12 by using the common key determined in the handshake of step S4 (step S9). The HTTP response encrypted by the server-side information processing apparatus 13B is received by the device-side information processing apparatus 13A via the network NW (step S10). The device-side information processing apparatus 13A decrypts the received HTTP response by using the common key (step S11). The HTTP response decrypted by the device-side information processing apparatus 13A is acquired by the IoT device 11 (step S12). The IoT device 11 receives the decrypted HTTP response (step S13). At this time, the IoT device 11 recognizes that the HTTP response has been returned from the server apparatus 12. Therefore, the IoT device 11 transmits the data to the server apparatus 12 (step S14).

The imaging data transmitted from the IoT device 11 is acquired by device-side information processing apparatus 13A (step S15). The device-side information processing apparatus 13A encrypts, using the common key, the data transmitted by the IoT device 11 (step S16). The data encrypted by the device-side information processing apparatus 13A is received by the server-side information processing apparatus 13B via the network NW (step S17).

The server-side information processing apparatus 13B decrypts the received data using the common key (step S18). The data decrypted by the server-side information processing apparatus 13B is acquired by the server apparatus 12 (step S19). The server apparatus 12 receives the decrypted data (step S20). At this time, the server apparatus 12 recognizes that the data from the IoT device 11 has been received.

In step S4 of the flowchart described above, if the mutual authentication between the device-side information processing apparatus 13A and the server-side information processing apparatus 13B is not correctly performed, the device-side information processing apparatus 13A does not permit communication with a communication destination. Specifically, the device-side information processing apparatus 13A does not output the information transmitted from the communication destination to the IoT device 11. This is because when the mutual authentication is not correctly performed, there is a possibility that the communication destination is an unauthorized communication apparatus pretending to be the server-side information processing apparatus 13B. In this case, the device-side information processing apparatus 13A may, when the mutual authentication is not correctly performed, transmit for example a communication record to the communication management apparatus 14. Thereby, the communication management apparatus 14 can acquire a communication record when the mutual authentication is not correctly performed and can monitor abnormality of the network by grasping a pattern or frequency of an unauthorized communication for the device-side information processing apparatus 13A under the management.

In addition, the device-side information processing apparatus 13A may determine whether to permit communication with a communication destination based on a transmission destination list indicating information of a communication device permitted to communicate with the IoT device 11 instead of mutual authentication in the handshake performed in step S4 of the flowchart. The information of the communication device indicated in the transmission destination list is, for example, a uniform resource locator (URL). The control unit 30 of the device-side information processing apparatus 13A permits communication with the communication destination when the URL of the communication destination is the URL registered in the transmission destination list, and does not permit communication when the URL is not registered in the transmission destination list.

The control unit 30 may update the transmission destination list. The control unit 30 stores, for example, the URL of the communication destination that is permitted to communicate with the IoT device 11 for a certain period of time and the URL of the communication destination that is not permitted. Then, the control unit 30 updates the transmission destination list by, for example, re-registering the URL of the communication destination that has performed communication for a certain period of time among the URLs registered in the transmission destination list. Alternatively, the device-side information processing apparatus 13 may transmit, to the communication management apparatus 14, the URL of the communication destination that is permitted to communicate for a certain period of time and the URL of the communication destination that is not permitted. In this case, for example, the communication management apparatus 14 may update the transmission destination list based on the URL of the communication destination that has performed communication with the device-side information processing apparatus 13A. The communication management apparatus 14 updates the transmission destination list, and thus, the communication management apparatus 14 can collectively manage communication devices communicating with the device-side information processing apparatus 13A under this management.

The device-side information processing apparatus 13A may verify whether the content of the information (e.g., the update program of the firmware) transmitted to the IoT device 11 after establishment of the handshake performed in step S4 is correct. For example, in a case where the update program of the firmware of the IoT device 11 is transmitted via the network NW, the control unit 30 of the device-side information processing apparatus 13A performs verification using a key for verification (verification key). In this case, the communication management apparatus 14 may transmit, for example, the verification key to each of the device-side information processing apparatus 13A and the server-side information processing apparatus 13B.

For example, the server-side information processing apparatus 13B generates hash values from information (plaintext) transmitted to the IoT device 11 and encrypts the generated hash values with the verification key. The server-side information processing apparatus 13B further encrypts the plaintext and the encrypted hash values with the private key, and transmits them to the IoT device 11. The device-side information processing apparatus 13 decrypts the information using the common key and acquires the plaintext and the encrypted hash values.

The device-side information processing apparatus 13A generates hash values from the acquired plaintext and decrypts the encrypted hash values with the verification key. When the hash values generated from the plaintext are equal to the decrypted hash values, the device-side information processing apparatus 13A determines that the information transmitted to the IoT device 11 is correct. In this case, the device-side information processing apparatus 13A outputs the decrypted information (plaintext) to the IoT device 11. On the other hand, if the hash values generated from the plaintext are not equal to the decrypted hash values, the device-side information processing apparatus 13A determines that there is a possibility that the information transmitted to the IoT device 11 is unauthorized information transmitted from an unauthorized communication device pretending to be the server apparatus 12 or the server-side information processing apparatus 13B. In this case, the device-side information processing apparatus 13A does not output the decrypted information (plaintext) to the IoT device 11.

Accordingly, the IoT device 11 can receive only the information that has been verified to be the correct content. In addition, while it is generally considered that the IoT device 11 determines whether or not the content of the update program in updating the firmware is correct, when the server-side information processing apparatus 13B instead of the IoT device 11 verifies the content of the information transmitted to the IoT device 11, it is possible to reduce the processing load of the IoT device 11.

As described above, the communication system 1 includes the device-side information processing apparatus 13A connected between the IoT device 11 and the network NW, and the server-side information processing apparatus 13B connected between the server apparatus 12 and the network NW. The device-side information processing apparatus 13A encrypts the information from the IoT device 11 and transmits it to the server-side information processing apparatus 13B via the network NW, and decrypts the information from the network NW (information from the server apparatus 12 encrypted by the information processing apparatus 13B) and transmits it to the IoT device 11. The server-side information processing apparatus 13B encrypts the information from the server apparatus 12 and transmits it to the device-side information processing apparatus 13 via the network NW, and decrypts the information from the network NW (information from the IoT device encrypted by the device-side information processing apparatus 13A) and transmits it to the server apparatus 12.

Accordingly, the communication system 1 can improve the safety of the social infrastructure system without changing the social infrastructure system. This is because the HTTP protocol data (so-called plaintext) transmitted from the IoT device 11 to the server apparatus 12 is combined with, for example, the SSL/TLS protocol by the device-side information processing apparatus 13 and is replaced with HTTPS with improved security. Furthermore, the control data transmitted from the server apparatus 12 to the IoT device 11 and the like is encrypted, decrypted by the device-side information processing apparatus 13, and received by the IoT device 11, and therefore, it is not necessary to cause the IoT device 11 to perform decrypting processing, and the existing device can be used as-is without changing.

In addition, in the communication system 1, the device-side information processing apparatus 13A and the server-side information processing apparatus 13B perform the mutual authentication, and thus, security can be improved as compared with a case where verification is performed in only one direction. For general client terminals and server apparatuses, because an unspecified number of client terminals communicate with the server apparatus, it is not realistic to issue valid client certificates to the unspecified number of client terminals and continue management. However, in a social infrastructure system or the like to which the communication system is applied, the relationship between the IoT device 11 and the server apparatus 12 is clearly specified. Therefore, the device-side information processing apparatus 13A and the server-side information processing apparatus 13B can mutually authenticate each other, and security can be improved.

In general, in a client terminal having no client certificate, it may be required to input an ID or a password issued by a server apparatus in order to communicate with the server apparatus. In such password authentication, a long character string in which characters and numbers are combined may be required for the password or a periodic change of the password may be required in order to maintain security. However, when the number of passwords to be remembered increases, management becomes troublesome, and there are cases where passwords are leaked, such as when passwords are left in a memo or recorded in a web browser.

In contrast, in the communication system 1, the device-side information processing apparatus 13A has a client (device) certificate, and thus mutual authentication can be reliably performed with the server apparatus 12. Thus, password authentication is not required. Therefore, the trouble of inputting a password or the trouble of periodically changing and managing the password can be eliminated, and the convenience of the user is improved. That is, safety can be maintained without imposing a burden on the user.

In a system in which a client terminal having no client certificate communicates with a server apparatus based on authentication using an ID and a password, communication with the server apparatus can be performed by anyone if the ID and the password are correctly input. Therefore, it becomes possible to take over the client terminal in an unauthorized manner and access the server apparatus in an unauthorized manner. For example, there is a possibility of being infected with ransomware in which the function of the client terminal is restricted by the server apparatus that has been taken over in an unauthorized manner and ransom money is required for cancellation.

In contrast, the communication system 1 described above performs the mutual authentication between the IoT device 11 and the server apparatus 12 via the device-side information processing apparatus 13A and the server-side information processing apparatus 13B, and thus the IoT device 11 and the server apparatus 12 are not taken over in an unauthorized manner. That is, in the communication system 1, it is possible to take countermeasures against ransomware as well.

In addition, for example, in a case where there is a terminal in which an administrator is not present in a network (also referred to as a "rogue device"), the terminal may be taken over in an unauthorized manner and used as an unauthorized terminal performing a malware attack and the like. In contrast, in the communication system 1 described above, the mutual authentication is performed between the IoT device 11 and the server apparatus 12 via the device-side information processing apparatus 13A (13B, 13C) and the server-side information processing apparatus 13B, and thus, even in a case where a terminal in which an administrator is not present inside the network NW is taken over in an unauthorized manner and used for an attack, it is possible to prevent the terminal from being infected with malware or the like.

In the communication system 1 described above, the server apparatus 12 is connected to the server-side information processing apparatus 13B, and the authentication processing is not performed inside the server apparatus 12. Therefore, it is not necessary to hold a certificate or the like inside the server apparatus 12, and it is clear that the server apparatus 12 connected to the server-side information processing apparatus 13B is under the management of the communication management apparatus 14. In a case where the server apparatus 12 already has a functional unit corresponding to the server-side information processing apparatus 13B, the server-side information processing apparatus 13B does not necessarily need to be physically connected between the server apparatus 12 and the network NW. In this case, the functional unit corresponding to the server-side information processing apparatus 13B, which is originally included in the server apparatus 12, performs authentication processing with the device-side information processing apparatus 13A.

In the communication system 1, at least one of mutual authentication or encryption/decryption processing is performed in the IC card 34. Therefore, the device cost of the information processing apparatus 13 (13A, 13B) can be suppressed.

In the communication system 1, the IC card 34 attached to the information processing apparatus 13 (13A, 13B) performs at least one of mutual authentication or encryption/decryption processing, but the configuration of performing mutual authentication and encryption/decryption processing in the communication system 1 is not limited to the IC card. The IC card 34 described above may be a functional unit having a storage function of storing a private key and a client certificate (or a server certificate) and a processing function of performing at least one of mutual authentication or encryption/decryption processing, and may be, for example, a SIM card on which an IC chip is mounted, or may not employ a card form.

In the communication system 1, the IC card 34 of the information processing apparatus 13 is detachably attached to the information processing apparatus 13. Thus, in the communication system 1, the IC card 34 and the information processing apparatus 13 can be separated from each other, and therefore, when one of them is replaced, it is only necessary to replace the corresponding one device. For example, in a case where the IC card 34 and the information processing apparatus 13 are integrated, when a part corresponding to the IC card 34 is replaced, the entire information processing apparatus 13 needs to be replaced; however, as compared to this case, the communication system 1 can suppress maintenance costs when a specific part such as the IC card 34 included in the information processing apparatus 13 is replaced.

The communication system 1 further includes the communication management apparatus 14, and the communication management apparatus 14 transmits, to the information processing apparatus 13, the private key and the client certificate stored in the IC card 34 attached to the information processing apparatus 13, and transmits, to the server-side information processing apparatus 13B, the private key and the server certificate stored in the IC card 34 attached to the server-side information processing apparatus 13B. Accordingly, the communication system 1 can perform a handshake and determine a common key using a valid private key and certificate issued by the communication management apparatus 14, and can further improve the security of the social infrastructure system in addition to achieving the above-described effects.

The configuration of the communication system 1 is not limited to the above-described examples. For example, the information processing apparatus 13 may use a hardware security module (HSM) that realizes the function of the information processing apparatus 13 with hardware based on a processing load. That is, the information processing apparatus 13 is not necessarily limited to the configuration in which the IC card is attached as long as secure processing is possible, and may be configured using an IC chip or an IC module that can realize the functions of the above-described information processing apparatus 13.

In the communication system 1, secure communication using the SSL/TLS protocol may be constantly performed, or whether to perform communication using the SSL/TLS protocol may be selectable. Furthermore, only one direction of the bidirectional communication between the IoT device 11 and the server apparatus 12 may be communication using the SSL/TLS protocol. Furthermore, secure communication using the SSL/TLS protocol may be constantly performed, or whether to perform communication using the SSL/TLS protocol may be selectable.

By constantly performing communication using the SSL/TLS protocol, it is possible to block communication from a device different from the valid information processing apparatus 13 verified by the information processing apparatus 13. Therefore, it is possible to prevent unauthorized access to the IoT device 11 or the server apparatus 12 and infection of the IoT device 11 or the server apparatus 12 with malware.

In the communication system 1, communication using the SSL/TLS protocol may be constantly performed, and unauthorized access to the IoT device 11 or the server apparatus 12 may be stored. In this case, a record of unauthorized access may be transmitted to the communication management apparatus 14. The communication management apparatus 14 can recognize the presence or absence of unauthorized access, and can detect an early sign of a large-scale attack on the entire system before the attack starts to thereby take measures.

In the communication system 1, the information processing apparatus 13 may periodically check whether the connection with the IoT device 11 or the server apparatus 12 to which its own apparatus is connected is maintained. In this case, information indicating the connection state may be transmitted to the communication management apparatus 14. If the communication management apparatus 14 is unable to receive information indicating the connection state from the information processing apparatus 13, the communication management apparatus 14 determines that the information processing apparatus 13 has been disconnected from the IoT device 11 or the server apparatus 12, and invalidates the disconnected information processing apparatus 13. In this way, the communication management apparatus 14 prevents the disconnected information processing apparatus 13 from being connected to an unauthorized apparatus and being misused by spoofing.

In the communication system 1, a chip with a high tamper resistance called a secure element acquiring the CC (Common Criteria/IS015408) certification may be mounted on the IC card 34 attached to the information processing apparatus 13. By storing a certificate including a private key and a public key using the chip, it is possible to maintain very high security.

In the communication system 1, the program of the IoT device 11 may be updated from the server apparatus 12, the communication management apparatus 14, or the like via the information processing apparatus 13. The function of the IoT device 11 can be safely updated by updating the program (updating the firmware) via the information processing apparatus 13. When the firmware is transmitted from the server apparatus 12 to the IoT device 11 in this manner, the firmware transmitted from the server apparatus 12 is given, for example, a signature of the server apparatus 12 encrypted by the server-side information processing apparatus 13B. In this case, upon the signature being decrypted by the information processing apparatus 13, the IoT device 11 can determine that the transmitted firmware is certainly the firmware transmitted from the server apparatus 12. Accordingly, even when unauthorized firmware is transmitted to the IoT device 11 from an unauthorized terminal pretending to be the server apparatus 12, it is possible to eliminate an erroneous update based on the unauthorized firmware from being performed on the IoT device 11.

In addition, because communication is performed via the information processing apparatus 13 in this manner, the firmware can be safely updated in the IoT device 11 from the server apparatus 12, the communication management apparatus 14 or the like, and therefore, it is also possible to reduce work costs compared to a case where a worker physically moves to a place where each of the IoT devices 11 is installed and performs firmware update work on the plurality of IoT devices 11.

In the communication system 1, the IoT device 11 may be activated or deactivated from the server apparatus 12, the communication management apparatus 14, or the like via the information processing apparatus 13. By performing activation or deactivation (remote activation) via the information processing apparatus 13, it is possible to safely update the function of the IoT device 11 and to realize secure remote control.

In the communication system 1, the case where the IoT device 11 and the server apparatus 12 communicate with each other in a wired manner has been described as an example, but the present invention is not limited thereto. At least one of the IoT device 11 or the server apparatus 12 may be a device that performs wireless communication through a wireless LAN or the like. For example, in a case where the IoT device 11 communicates with the server apparatus 12 through wireless communication, the information processing apparatus 13 has a wireless communication function, encrypts data transmitted by the IoT device 11, and transmits the encrypted data to the server apparatus 12 through wireless communication.

In the above-described example, in the communication system 1, the case where the information processing apparatus 13 communicates with the server-side information processing apparatus 13B has been described, but the communication destination of the information processing apparatus 13 is not limited thereto. For example, the information processing apparatus 13A may communicate with the information processing apparatus 13B. The information processing apparatus 13A, if receiving a communication start signal from the information processing apparatus 13B, performs mutual authentication with the information processing apparatus 13B to confirm that the information processing apparatus 13B is a valid communication terminal. When the mutual authentication is correctly performed, the information processing apparatus 13A outputs the information received from the information processing apparatus 13B to the IoT device 11. By providing an authenticator to transmission data using encryption, it is possible to detect falsification of communication information and identify a transmitter.

As described above, in the communication system 1, it is possible to ensure "receiving data that is not falsified" "from a correct partner" in the communication between the device-side information processing apparatus 13 and the server-side information processing apparatus 13B and the communication between the device-side information processing apparatuses 13.

Next, monitoring processing for the port 16 in the IoT device 11 according to the communication system 1 according to the embodiment will be described.

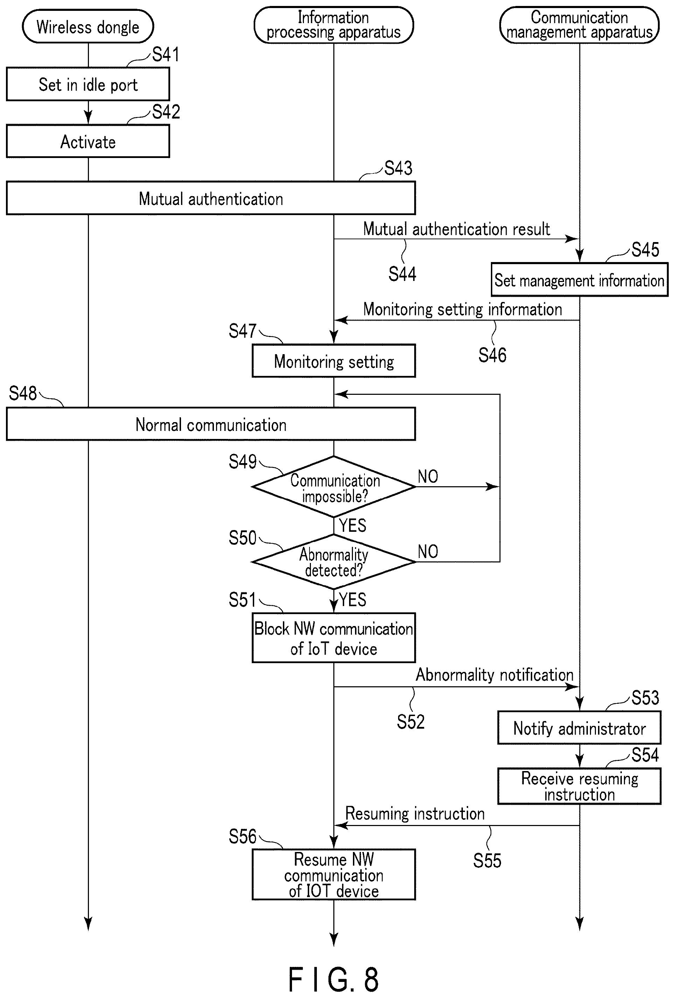

FIG. 8 is a sequence illustrating an operation example of monitoring processing for the port 16 of the IoT device 11 according to the communication system 1 according to the embodiment.

Herein, in the configuration as illustrated in FIG. 1, according to the communication system 1, the wireless dongle 15 is attached to the port (idle port) 16 to which no specific device is connected in the IoT device 11. That is, the wireless dongle 15 is set in the port 16 that is in the idle state in the IoT device 11 through an operation of the administrator or the like (step S41).

The wireless dongle 15 set in the port 16 is supplied with power from the port 16 via the connector 64. The power supply unit 63 of the wireless dongle 15 supplies power supplied from the port 16 to each unit via the connector 64. Thus, the microcomputer 61 of the wireless dongle 15 is activated by the power supplied from the power supply unit 63 (step S42).

Upon being activated, the microcomputer 61 of the wireless dongle 15 transmits a connection request to the information processing apparatus 13A through wireless communication using the wireless communication unit 62.

The device-side information processing apparatus 13A receives the connection request from the wireless dongle 15 through the wireless communication unit 35. Upon receiving the connection request from the wireless dongle 15 through the wireless communication unit 35, the control unit 30 of the information processing apparatus 13A performs mutual authentication with the wireless dongle 15 (step 43).

Upon success of the mutual authentication with the wireless dongle 15, the control unit 30 of the information processing apparatus 13A notifies the communication management apparatus 14 of the success of the mutual authentication with the wireless dongle 15 through the communication unit 32 (step 44). Here, the control unit 30 of the information processing apparatus 13A may also notify the communication management apparatus 14 of information indicating to which port 16 of which IoT device 11 the wireless dongle 15 is connected, etc.

The communication management apparatus 14 receives a notification indicating that the mutual authentication with the wireless dongle 15 has been successful from the information processing apparatus 13A through the NW communication unit 90. Upon receiving the notification indicating that the mutual authentication with the wireless dongle 15 has been successful from the information processing apparatus 13A, the control unit 91 of the communication management apparatus 14 sets management information including monitoring setting information for monitoring the port 16 of the IoT device 11 in which the wireless dongle 15 is set (step S45).

For example, the control unit 91 of the communication management apparatus 14 sets management information that includes monitoring setting information indicating an interval (monitoring interval) at which the information processing apparatus 13A communicates with the wireless dongle 15, in order to monitor the port 16 of the IoT device 11 in which the wireless dongle 15 is set. The control unit 91 of the communication management apparatus 14 may store and manage identification information of the IoT device 11, identification information of the wireless dongle 15, identification information of the information processing apparatus 13A and the like in association with one another in the storage unit 92.

Upon setting the management information including the monitoring setting information, the control unit 91 of the communication management apparatus 14 transmits the monitoring setting information to the information processing apparatus 13A (step S46).

The information processing apparatus 13A receives the monitoring setting information from the communication management apparatus 14 through the communication unit 32. Upon receiving the monitoring setting information, the control unit 30 of the information processing apparatus 13A performs monitoring setting for the port 16 of the IoT device 11 in which the wireless dongle 15 is set based on the received monitoring setting information (step S47). For example, the control unit 30 of the information processing apparatus 13A sets, as monitoring setting, an interval (monitoring interval) at which communication is performed with the wireless dongle 15, a communication-impossible period (abnormality detection period) for determining an abnormality, and the like.

Upon completion of the monitoring setting, the control unit 30 of the information processing apparatus 13A communicates with the wireless dongle 15 according to the monitoring setting (step S48). For example, the control unit 30 of the information processing apparatus 13A transmits a response request to the wireless dongle 15 at a monitoring interval set according to the monitoring setting through the wireless communication unit 35. The wireless dongle 15 receives the response request from the information processing apparatus 13A through the wireless communication unit 62, and transmits a response to the response request to the information processing apparatus 13A. Thus, the information processing apparatus 13A can confirm that the wireless dongle 15 is set in the port 16 of the IoT device 11 at each monitoring interval.

That is, if the communication with the wireless dongle 15 is impossible (step S49, NO), the control unit 30 of the information processing apparatus 13A determines whether or not a period during which communication-impossible continues is equal to or longer than a period for determining an abnormality (abnormality detection period) (step S50). For example, if the monitoring interval is set to 500 ms and the abnormality detection period is set to 10 s, the control unit 30 detects an abnormality when communication is impossible twenty times for a row at each monitoring interval.

If the communication with the wireless dongle 15 is performed in a normal manner (step S49, NO), or if the period during which communication-impossible continues is less than the abnormality detection period (step S50, NO), the control unit 30 of the information processing apparatus 13A repeats the communication with the wireless dongle 15 at each monitoring interval.

If the period during which communication-impossible continues is equal to or longer than the abnormality detection period (step S50, YES), the control unit 30 of the information processing apparatus 13A blocks the network communications of the IoT device 11 set with the wireless dongle 15 (step S51).

Furthermore, if the period during which communication-impossible continues is equal to or longer than the abnormality detection period (step S50, YES), the control unit 30 of the information processing apparatus 13A transmits an abnormality notification indicating that communications of the wireless dongle 15 set in the port 16 of the IoT device 11 is impossible to the communication management apparatus 14 through the communication unit 32 (step S52).

The communication management apparatus 14 receives the abnormality notification from the information processing apparatus 13A through the NW communication unit 90. Upon receiving the abnormality notification from the information processing apparatus 13A, the control unit 91 of the communication management apparatus 14 notifies a preset administrator of the abnormality (step S53).

For example, the control unit 91 of the communication management apparatus 14 transmits, to a notification destination of the administrator (a terminal device of the administrator or an email address of the administrator) set in advice as a notification destination, a notification indicating that communication with the wireless dongle 15 set in the port 16 of the IoT device 11 is impossible or that network communications of the IoT device 11 has been blocked due to the communication with the wireless dongle 15 being impossible. For example, the administrator receives the notification from the communication management apparatus 14 with its own terminal device (computer) connected to the network.

The control unit 91 of the communication management apparatus 14 may notify the administrator of the abnormality by displaying, on a display device connected to the communication management apparatus 14, information that the communication with the wireless dongle 15 set in the port 16 of the IoT device 11 is impossible or information that the network communications of the IoT device 11 is blocked due to the communication with the wireless dongle 15 being impossible.

If notifying the administrator of the abnormality that the network communications of the IoT device 11 is blocked due to the communication with the wireless dongle 15 being impossible, the control unit 91 of the communication management apparatus 14 receives from the administrator an instruction to resume the network communications of the IoT device 11 (step S54). For example, the administrator logs in to the communication management apparatus 14 using his/her terminal device (computer) connected to the network and checks the state of the IoT device 11 or provides an instruction to resume communications of the IoT device.

Upon being instructed to resume the network communications of the IoT device 11 by the administrator, the control unit 91 of the communication management apparatus 14 transmits the instruction to resume the network communication to the information processing apparatus 13A through the NW communication unit 90 (step S55).

The information processing apparatus 13A receives the instruction to resume the network communications of the IoT device 11 from the communication management apparatus 14 through the communication unit 32. If the instruction to resume the network communications of the IoT device 11 is received, the control unit 30 of the information processing apparatus 13A permits (resumes) the network communications of the IoT device 11. If the network communication is resumed, the control unit 30 of the information processing apparatus 13A may monitor the port 16 to which the wireless dongle 15 is set in the IoT device 11 by executing mutual authentication with the wireless dongle 15 again as in step S43.

In the information processing apparatus 13A, the communications with the wireless dongle 15 become impossible when the IoT device 11 is powered off. Therefore, the information processing apparatus 13A may detect the on/off state of the power source of the IoT device 11 and stop monitoring (abnormality detection) of the ports 16 through wireless communication with the wireless dongle 15 when the IoT device 11 is powered off. Furthermore, if detecting that the IoT device 11 that has been powered off is powered on again, the information processing apparatus 13A may resume the wireless communication with the wireless dongle 15 and monitor the port 16 as described above.

Furthermore, if the information processing apparatus 13A cannot detect the on/off state of the power of the IoT device 11, the information processing apparatus 13A blocks the network communications of the IoT device 11 according to the above-described operation. In this case, the information processing apparatus 13A may monitor the port 16 by resuming communication with the wireless dongle 15 attached to the port 16 of the IoT device 11 in response to an instruction to the switch 36 from the administrator or the operator.

That is, the information processing apparatus 13A may monitor the port 16 of the IoT device 11 to which the wireless dongle 15 is attached in response to an instruction to the switch 36. For example, upon the switch 36 being instructed, the control unit 30 of the information processing apparatus 13A may proceed to step S43 of FIG. 8 and execute mutual authentication with the wireless dongle 15 attached to the port 16 of the IoT device 11. In this case, the information processing apparatus 13A can start communication with the wireless dongle in response to an instruction to the switch 36, and can monitor the port 16 of the IoT device 11 through communication with the wireless dongle.

As described above, according to the communication system of the embodiment, the wireless dongle is set in the idle port of the IoT device connected to the information processing apparatus. The information processing apparatus to which the IoT device is connected periodically (continuously) performs wireless communication with the wireless dongle set in the port of the IoT device according to the monitoring setting information instructed from the communication management apparatus. If the communication-impossible state with the wireless dongle continues for the abnormality detection period or longer, the information processing apparatus notifies the communication management apparatus of the abnormality and disconnects the IoT device from the network.

Accordingly, the information processing apparatus and the communication management apparatus can monitor the state of the idle port of the IoT device. Furthermore, the wireless dongle physically blocks the idle port of the IoT device, thereby preventing any unspecified external device from being connected to the idle port of the IoT device.

In addition, when the wireless dongle physically blocking the idle port of the IoT device isremoved, the possibility of an external device being connected to the idle port of the IoT device increases, but when communication with the wireless dongle becomes impossible, the information processing apparatus disconnects the IoT device from the network and notifies the communication management apparatus of an abnormality, thereby reducing a risk caused by connecting any external device to the idle port of the IoT device. For example, the communication system can prevent the IoT device from performing network communication in a state where an unauthorized external device other than the wireless dongle is connected to the idle port.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A communication system comprising an information processing apparatus and a wireless device,
the wireless device comprising:
a contact part attached to a port of a device to be protected; and
a first wireless communication unit configured to wirelessly communicate with the information processing apparatus in a state where the contact part is attached to the port of the device to be protected,
the information processing apparatus comprising:
a first communication interface connected to the device to be protected;
a second communication interface connected to a network;
a second wireless communication unit configured to wirelessly communicate with the wireless device; and
a control unit configured to block communications of the device to be protected via the network in response to a state in which communication with the wireless device is impossible continuing for an abnormality detection period or longer.

2. The communication system according to claim 1,
wherein
the control unit is configured to block only communications of the device to be protected with the network via the first communication interface and the second communication interface in response to the state in which communication with the wireless device is impossible continuing for the abnormality detection period or longer.

3. The communication system according to claim 1,
wherein
the control unit of the information processing apparatus is configured to set an interval for communicating with the wireless device in accordance with monitoring setting information designated by a communication management apparatus with which communication is performed via the network through the second communication interface.

4. The communication system according to claim 3,
wherein
the control unit of the information processing apparatus is configured to set the abnormality detection period in accordance with the monitoring setting information designated by the communication management apparatus.

5. The communication system according to claim 1,
wherein
the wireless device further comprises a microcomputer configured to execute mutual authentication with the information processing apparatus with which wireless communication is performed through the first wireless communication unit, and
the control unit of the information processing apparatus is configured to start communication with the wireless device attached to the port of the device to be protected after success of mutual authentication with the wireless device with which wireless communication is performed through the second wireless communication unit.

6. The communication system according to claim 1,
wherein
the control unit of the information processing apparatus is configured to notify the communication management apparatus, via the network through the second communication interface, of an abnormality of the port to which the wireless device is attached in the device to be protected in response to the state in which communication with the wireless device is impossible continuing for the abnormality detection period or longer.

7. The communication system according to claim 6,
wherein
the communication system further comprises the communication management apparatus,
the communication management apparatus comprising:
a network communication unit configured to communicate with the information processing apparatus via the network; and
a control unit configured to notify an administrator of an abnormality in the device to be protected in response to receiving, from the information processing apparatus through the network communication unit, an abnormality notification of the port to which the wireless device is attached in the device to be protected.

8. The communication system according to claim 7,
wherein
the control unit of the communication management apparatus is configured to instruct, through the network communication unit, the information processing apparatus to resume communications of the device to be protected via the network in response to the administrator providing an instruction to resume communications of the device to be protected via the network, and
the control unit of the information processing apparatus is configured to resume communications of the device to be protected via the network in response to receiving an instruction from the communication management apparatus to resume network communications of the device to be protected.

9. An information processing apparatus comprising:
a first communication interface connected to a device to be protected;
a second communication interface connected to a network;
a wireless communication unit configured to wirelessly communicate with a wireless device operating in a state of being attached to a port of the device to be protected; and
a control unit configured to block communications of the device to be protected via the network in response to a state in which communication with the wireless device is impossible continuing for an abnormality detection period or longer.

10. A monitoring method for monitoring a state of a device to be protected, the method comprising:
performing wireless communication by an information processing apparatus connected between a device to be protected and a network and a wireless device attached to a port of the device to be protected; and
blocking communications of the device to be protected via the network by the information processing apparatus in response to a state in which communication between the information processing apparatus and the wireless device is impossible continuing for an abnormality detection period or longer.
